# EUROPÄISCHE PATENTSCHRIFT

(11) **EP 1 986 835 B1**
(45) Veröffentlichungstag und Bekanntmachung des Hinweises auf die Patenterteilung: **05.01.2011**
(21) Anmeldenummer: 06806687.7
(22) Anmeldetag: 06.11.2006
(51) Int. Cl.: B29C 45/14

(54) **VERFAHREN UND SPRITZGIESSWERKZEUG ZUM HERSTELLEN EINER FASERVERBUNDSTRUKTUR**
METHOD AND INJECTION MOLDING APPARATUS FOR PRODUCING A FIBROUS COMPOSITE STRUCTURE
PROCEDE ET MACHINE D'INJECTION POUR PRODUIRE UNE STRUCTURE COMPOSITE RENFORCEE PAR FIBRES

(30) Priorität: 16.12.2005 DE 102005060147
(43) Veröffentlichungstag der Anmeldung: 05.11.2008
(73) Patentinhaber: Bayerische Motoren Werke Aktiengesellschaft, 80809 München (DE)
(72) Erfinder: PESCHEL, Lothar, 84036 Landshut (DE); EFFNER, Torben, 84036 Kumhausen (DE); POPP, Thomas, 84172 Buch am Erlbach (DE); BAUER, Stefan, 81373 München (DE)
(74) Vertreter: Diener, Reinhold Jürgen
(86) Internationale Anmeldenummer: PCT/EP2006/010589
(87) Internationale Veröffentlichungsnummer: WO 2007/073797

(56) Entgegenhaltungen:
- EP-A1- 0 547 625
- DE-C1- 10 124 122
- FR-A1- 2 768 648
- GB-A- 2 398 756
- JP-A- 9 011 344

## Beschreibung

Die Erfindung betrifft ein Verfahren und ein Spritzgießwerkzeug gemäß dem Oberbegriff des Patentanspruches 1 bzw. 9.

Ein derartiges Verfahren bzw. ein derartiges Spritzgießwerkzeug, gemäß dem Oberbegriff des Anspruchs 9, ist aus der JP 09 011 344 A bekannt. Zum relevanten Stand der Technik zählen ferner die GB-A-2 398 756, die FR-A-2-768 648 sowie die EP 0 547 625 A.

Es ist bekannt, Kraftfahrzeug-Karosserieteile in Faserverbundbauweise dadurch herzustellen, dass ein plattenförmiges, aus einer endlosfaserverstärkten Thermoplastmatrix bestehendes Faserlaminat unter Druck- und Wärmeeinwirkung verformt und anschließend im Wege des Spritzgießverfahrens örtlich z.B. rippenförmig verstärkt wird. Dabei wird das Faserlaminat entweder in einem Umformwerkzeug getrennt vom Spritzgießprozess vorgeformt und dann beschnitten und in einem weiteren Werkzeug mit den Spritzgussverstärkungen versehen oder in einem kombinierten Umform- und Spritzgießwerkzeug nacheinander sowohl verformt als auch hinterspritzt und anschließend auf Sollmaß gebracht. Eine derartige Technologie erfordert jedoch in beiden Fällen einen mehrstufigen Fertigungsprozess und einen beschnittbedirigt großen Materialabfall.

Demgegenüber ist es Aufgabe der Erfindung, das Verfahren und das Spritzgießwerkzeug der eingangs genannten Art so auszubilden, dass auch technologisch einfache Weise eine rationelle Serienfertigung ermöglicht wird.

Diese Aufgabe wird durch die Merkmale der Patentansprüche 1 bzw. 9 gelöst.

Erfindungsgemäß wird die Fasereinlage ohne Faserlagenüberstand kleiner als erforderlich zugeschnitten und der dadurch entstehende, randseitige Spalt in der Formkavität durch die Spritzgießmasse ausgefüllt, so dass die Notwendigkeit entfällt, das umgeformte Faserlaminat in einem nachgeschalteten Beschnittprozess auf Sollmaß zu beschneiden, und zugleich wird durch den Klemmschieber eine aus dem kleineren Zuschnitt resultierende Fehlpositionierung der Fasereinlage in der Formkavität vermieden und eine exakte Fixierung und Formgebung des Faserverbundbauteils sichergestellt. Das Ergebnis ist eine mit homogen angespritzten Materialverstärkungen versehene Faserverbundstruktur, die in einem sehr einfachen, einstufigen Fertigungsprozess und ohne Beschnittabfall mit hoher Maßhaltigkeit und einer durchgehend stoffschlüssigen Materialbindung hergestellt wird.

In weiterer vorteilhafter Ausgestaltung der Erfindung besteht die Spritzgießmasse zweckmäßigerweise aus einem thermoplastischen, und zwar einem kurzfaserverstärkten Kunststoff, der im Wesentlichen die gleichen Materialeigenschaften wie die Faserverbundmatrix aufweist, mit der die Fasereinlage vorimprägniert ist. Zweckmäßigerweise jedoch wird die Fasereinlage im ungetränkten Zustand in das Spritzgießwerkzeug eingelegt und erst dort mit der Spritzgießmasse durchtränkt.

Vorzugsweise wird die Spritzgießmasse nicht nur randseitig, sondern auch auf der Vorder- und/oder Rückseite der Fasereinlage angespritzt, und im Hinblick auf eine faserschonende Fixierung und Verformung der Fasereinlage empfiehlt es sich, diese durch den Schieber flächig in der Formkavität festzuklemmen und die Kontaktfläche des Schiebers als die Fasereinlage teilverformende Druckfläche auszubilden.

In besonders bevorzugter Weise werden die Fasereinlagen automatisiert in das Spritzgießwerkzeug eingelegt, und gemäß einem weiteren, insbesondere für eine Serienfertigung wesentlichen Aspekt der Erfindung enthält das Spritzgießwerkzeug einen hubbeweglich angetriebenen Stanzstempel für die Fasereinlage in der Formkavität, so dass sich der Spritzgieß- mit einem Stanzvorgang zu einem einzigen Fertigungsschritt kombinieren und dadurch der Herstellungsprozess weiter vereinfachen lässt. Dabei wird der Stanzvorgang in der Formkavität zweckmäßigerweise unmittelbar nach dem Erstarren der Spritzgießmasse durchgeführt und anschließend wird der Stanzbeschnitt in den entstandenen Durchbruch der Faserverbundstruktur zurückgeschoben und gemeinsam mit dieser dem Spritzgießwerkzeug entnommen, um so einen unkontrollierten Verbleib des ausgestanzten Faserverbundabfalls im Spritzgießwerkzeug zu verhindern.

Die Erfindung wird im Folgenden anhand eines in den Figuren dargestellten Ausführungsbeispiels näher beschrieben. Es zeigen:
- **Fig. 1a bis 1d**: einen kombinierten Umform- und Spritzgießprozess in aufeinanderfolgenden Fertigungsphasen mit dem zugehörigen Werkzeug in stark schematisierter Darstellung; und
- **Fig. 2a bis 2c**: einen in das Umform-Spritzgießwerkzeug nach Fig. 1 in- tegrierten Stanzmechanismus, ebenfalls in stark schema- tisierter Darstellung.

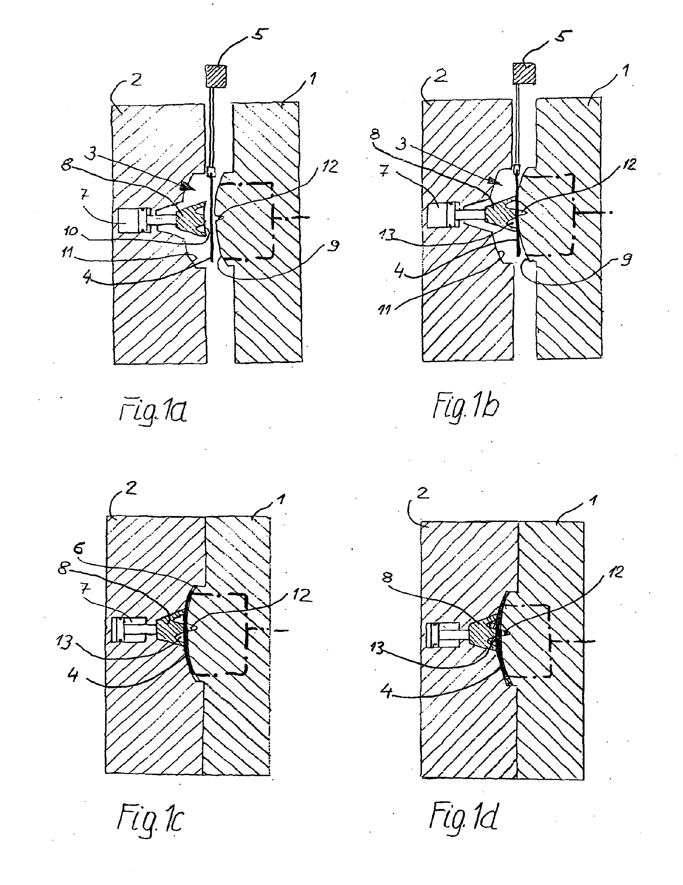

Das in den Fign. gezeigte Spritzgießwerkzeug besteht aus einer feststehenden und einer beweglichen Formhälfte 1, 2, die im geschlossenen Zustand (Fig. 1 c, d) eine Formkavität 3 zwischen sich begrenzen, welche über - in den Fign. strichpunktiert dargestellte - Angusskanäle mit einer thermoplastischen Spritzgießmasse aus einer nicht gezeigten Plastifiziereinheit befüllt wird.

Zur Herstellung eines endlosfaserverstärkten Thermoplastbauteils mit stoffschlüssig angeformten, etwa rippenförmigen Materialverstärkungen, bspw. einer schalenförmigen Faserverbundvorderwand für ein Kraftfahrzeug, wird zunächst eine thermoplastgetränkte Fasereinlage 4 im plastisch verformbar erwärmten Zustand mittels eines Fördermechanismus 5 automatisch zwischen den Formhälften 1, 2 des Spritzgießwerkzeugs platziert (Fig. 1 a). Der Zuschnitt der Fasereinlage 4 wird so gewählt, dass diese bei geschlossenem Werkzeug mit Sicherheit nicht über den Aussenrand der Formkavität 3 hinausreicht, so dass ein Beschnittvorgang nach Fertigstellung des Bauteils entfällt. Unter Berücksichtigung von unvermeidbaren Zuschnitts- und Platzierungstoleranzen wird die Fasereinlage 4 kleiner als theoretisch erforderlich zugeschnitten, so dass ein schmaler Spalt 6 von z. B. 5 mm (Fig. 1 c) zwischen dem Rand der Formkavität 3 und der Fasereinlage 4 freigehalten bleibt.

Die Übergabe der Fasereinlage 4 vom Fördermechanismus 5 an das Spritzgießwerkzeug erfolgt mit Hilfe eines in der beweglichen Formhälfte 2 etwa durch einen hydraulischen Aktuator 7 hubbeweglich angetriebenen Schiebers 8, mit dem die Fasereinlage 4 an der Formfläche 9 der feststehenden Formhälfte 1 festgeklemmt wird, woraufhin der Fördermechnanismus 5 von der Fasereinlage 4 gelöst und aus der Werkzeugöffnung abgezogen werden kann. Die einlagenseitige Kontaktfläche 10 des Schiebers 8 ist korrespondierend zur Formfläche 9 der feststehenden Formhälfte 1 konturiert, so dass die Fasereinlage 4 flächig fixiert und bei noch geöffnetem Werkzeug im Kontaktflächenbereich des Schiebers 8 vorgeformt wird (Fig. 1 b).

Anschließend werden die Formhälften 1, 2 geschlossen und der Schieber 8 sychron zur Schließbewegung der Formhälften 1, 2 zurückgefahren, bis die Kontaktfläche 10 in der Schließlage der Formhälften 1, 2 flächenkonform an die bewegliche Formfläche 11 anschließt und die Fasereinlage 4 in die endgültige Schalenform verpresst ist (Fig. 1 c). Nunmehr wird die Spritzgießmasse, vorzugsweise ein kurzfaserverstärkter Thermoplast auf der gleichen Kunststoffbasis wie die Thermoplastmatrix der Fasereinlage 4, über die Angusskanäle in die Formkavität 3 eingespritzt und dadurch der freie Randstreifen 6 und die für die rippenförmigen Verstärkungen vorgesehenen Aussparungen 12, 13 in der Formkavität 3 und dem Schieber 8 mit Faserverbundmaterial ausgefüllt (Fig. 1d). Nach dem Erstarren der Faserverbundstruktur lässt sich diese als durchgehend homogenes, ohne Nachbearbeitung exakt maßhaltiges, faserverstärktes Kunststoffteil mit einem stoffschlüssig angeformten Randstreifen 6 und rippenförmigen Verstärkungen in den Aussparungen 12, 13 entformen.

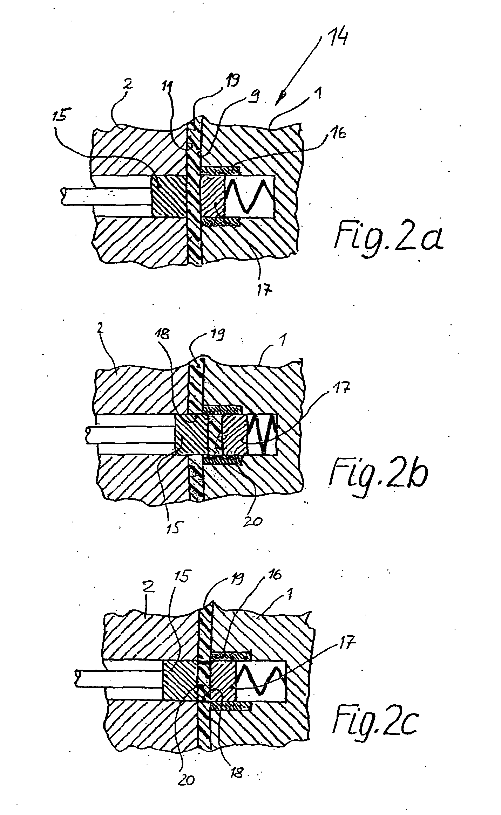

Eine weitere konstruktive Besonderheit des Spritzgießwerkzeugs wird anhand der Fig. 2 erläutert, wo die der Fig. 1 entsprechenden Komponenten durch das gleiche Bezugszeichen gekennzeichnet sind. Demgemäß ist das Spritzgießwerkzeug mit einem - in Fig. 1 nicht gezeigten - insgesamt mit 14 bezeichneten Stanzmechanismus kombiniert, welcher aus einem in der beweglichen Formhälfte 2 verschieblich, z. B. wiederum hydraulisch angetriebenen Stanzstempel 15 und einer Stanzmatrize 16 in der feststehenden Formhälfte 1 sowie einem federbelasteten, ebenfalls in der Formhälfte 1 angeordneten Gegenstempel 17 besteht. In der Öffnungslage der Formhälften 1, 2 und während des Einspritzvorgangs sind der Stanzstempel 15 und der Gegenstempel 17 flächenkonform zur jeweils zugeordneten Formfläche 9 bzw. 11 positioniert (Fig.2a). Nach Beendigung der Einspritzphase wird der Stanzstempel 15 aktiviert und dadurch ein entsprechender Durchbruch 18 in die Faserverbundstruktur 19 eingestanzt. Auf diese Weise lässt sich der Umform- und Spritzgießprozess mit einem Stanzvorgang kombinieren und so der Fertigungsaufwand weiter verringern. Um zu verhindern, dass der Stanzbeschnitt 20 beim Entformen der Faserverbundstruktur 19 unkontrolliert im Werkzeug verbleibt oder aus diesem herausfällt, wird er nach dem Stanzvorgang durch den Gegenstempel 17 in den Durchbruch 18 zurückgeschoben (Fig. 2 c), so dass er reibschlüssig an der Faserverbundstruktur 19 gehalten bleibt, wenn diese dem Werkzeug entnommen wird.

Im Rahmen der Erfindung ist es auch möglich, die Spritzgießmasse mit einem chemischen oder einem physikalischen Treibmittel zu versetzen, welches im Spritzgießwerkzeug aufschäumt, wodurch eine weitere Gewichtseinsparung erzielt wird, und/oder anstelle einer vorimprägnierten eine trockene Fasereinlage zu verwenden, die dann im Spritzgießwerkzeug mit dem Thermoplasten matrixdurchtränkt wird. Als Fasereinlage kann sowohl ein Fasergelege als auch ein Fasergewebe oder auch eine unidirektionale Faserstruktur zum Einsatz kommen, mit der weiteren Möglichkeit, diese mit lokal aufgenähten Faserauflagen vorzufertigen.

## Patentansprüche

1. Verfahren zum Herstellen einer Faserverbundstruktur, inbesondere eines Kraftfahrzeug-Karosserieteils, bei dem ein Faserlagenzuschnitt (4) in ein Umform-Spritzgießwerkzeug eingelegt und beim Schließen des Werkzeugs verformt wird und anschließend die Werkzeugkavität (3) mit der Spritzgießmasse befüllt und die Verbundstruktur nach dem Aushärten der Spritzgießmasse entformt wird, wobei eine durch den Faserlagenzuschnitt gebildete Fasereinlage derart zugeschnitten wird, dass nach dem Schließen des Werkzeugs ein randseitiger Spalt zwischen der Fasereinlage (4) und der Werkzeugkavität (3) freigehalten bleibt, welcher beim nachfolgenden Spritzgießvorgang durch die Spritzgießmasse ausgefüllt wird, und dass die Fasereinlage (4) vor dem Schließen des Werkzeug (1, 2) durch mindestens einen voreilenden, in der Werkzeugschließlage zurückgefahrenen Schieber (8) in der Werkzeugkavität lagefixiert wird, wobei
als Fasereinlage ein vorgetränkter Faserlagenzuschnitt verwendet wird und die Fasereinlage (4) in der Öffnungslage des Spntzgießwerkzeugs (1, 2) durch den Schieber (8) flächig in der Formkavität festgeklemmt wird, wobei die Fasereinlage im Spritzgießwerkzeug nicht nur randseitig sondern zumindest teilweise auch auf der Vorder- und Rückseite kunststoffumspritzt wird.

2. Verfahren nach Anspruch 1, **dadurch gekennzeichnet, dass** als Spritzgießmasse ein thermoplastischer Kunststoff verwendet wird.

3. Verfahren nach Anspruch 1 oder 2, **dadurch gekennzeichnet, dass** als Spritzgießmasse ein kurzfaserverstärkter Kunststoff verwendet wird.

4. Verfahren nach einem der vorhergehenden Ansprüche, **dadurch gekennzeichnet, dass** der Schieber auf Seiten der Fasereinlage mit einer die Fasereinlage formgebend verpressenden Kontaktfläche versehen wird.

5. Verfahren nach einem der vorhergehenden Ansprüche, **dadurch gekennzeichnet, dass** die Fasereinlage automatisiert in das Spritzgießwerkzeug eingelegt wird.

6. Verfahren nach einem der vorhergehenden Ansprüche, **dadurch gekennzeichnet, dass** die Fasereinlage durch mindestens einen im Spritzgießwerkzeug hubbeweglich angeordneten Stanzstempel mit einem oder mehreren Durchbrüchen versehen wird.

7. Verfahren nach Anspruch 6, **dadurch gekennzeichnet, dass** der mindestens eine Durchbruch nach dem Erstarren der Spritzgießmasse hergestellt wird.

8. Verfahren nach Anspruch 6 oder 7, **dadurch gekennzeichnet, dass** der Stanzbeschnitt nach dem Stanzvorgang in den Durchbruch der Faserverbundstruktur zurückgeschoben und gemeinsam mit dieser dem Werkzeug entnommen wird.

9. Umform-Spritzgießwerkzeug zum Herstellen einer Faserverbundstruktur, inbesondere eines Kraftfahrzeug-Karosserieteils, mit einer durch eine bewegliche und eine feststehende Formhälfte begrenzten Werkzeugkavität zur Aufnahme eines in der Öffnungslage des Werkzeugs eingelegten und in der Schließlage mit der Spritzgießmasse umspritzten Faserlagenzuschnitts, wobei in einer der Formhälften (2) ein in der Öffnungslage des Werkzeugs (1, 2) in die Werkzeugkavität (3) vorgeschobener und in der Werkzeug-Schließlage zurückgefahrener Schieber (8) zum Fixieren des Faserlagenzuschnitts (4) in der Werkzeugkavität integriert ist, **dadurch gekennzeichnet daß** der Schieber (8) auf Seiten des Faserlagenzuschnitts mit einer den Faserlagenzuschnitt formgebend verpressenden Kontaktfläche (10) versehen ist, und dass die Fasereinlage im Spritzgießwerkzeug nicht nur randseitig sondern zumindest teilweise auch auf der Vorder- und Rückseite kunststoffumspritzt wird.

10. Umform-Spritzgießwerkzeug nach Anspruch 9, **dadurch gekennzeichnet, dass**
die eine Formhälften (2) mit mindestens einem hubbeweglich angetriebenen Stanzstempel (15) und die andere (1) mit einer korrespondierenden Stanzmatrize (16) versehen ist.

11. Umform-Spritzgießwerkzeug nach Anspruch 10, **dadurch gekennzeichnet, dass**
die mit der Stanzmatrize (16) versehene Formhälfte (1) einen den Stanzbeschnitt (20) nach Beendigung des Stanzvorgangs in die Faserverbundstruktur (19) zurückschiebenden Gegenstempel (17) aufweist.

## Claims

1. A method for producing a fibre composite structure, especially a motor vehicle body part, in which a fibre layer pre-cut part (4) is placed in a forming injection moulding tool and formed on closing the tool and the tool cavity (3) is then filled with the injection moulding compound and the composite structure is demoulded after the hardening of the injection moulding compound, a fibre insert being formed by the fibre layer pre-cut part being cut to size in such a way that, once the tool has been closed, an edge gap is kept free between the fibre insert (4) and the tool cavity (3), which is filled during the subsequent injection moulding process by the injection moulding compound and in that the fibre insert (4), before the tool (1, 2) is closed, is fixed in position by at least one leading slide (8), which has moved back in the tool closing position, in the tool cavity, wherein a pre-impregnated fibre layer pre-cut part is used as the fibre insert and the fibre insert (4) is clamped flat in the mould cavity by the slide (8) in the opening position of the injection moulding tool (1, 2), wherein the fibre insert has plastics material injected around it in the injection moulding tool not only at the edge but at least partially also on the front and rear.

2. A method according to claim 1, **characterised in that** a thermoplastic plastics material is used as the injection moulding compound.

3. A method according to claim 1 or claim 2, **characterised in that** a short fibre-reinforced plastics material is used as the injection moulding compound.

4. A method according to any one of the preceding claims, **characterised in that** the slide is provided on the side of the fibre insert with a contact face pressing the fibre insert in a shaping manner.

5. A method according to any one of the preceding claims, **characterised in that** the fibre insert is placed in the injection moulding tool in an automated manner.

6. A method according to any one of the preceding claims, **characterised in that** the fibre insert is provided with one or more openings by at least one punching die arranged with a movable stroke in the injection moulding tool.

7. A method according to claim 6, **characterised in that** the at least one opening is produced after the setting of the injection moulding compound.

8. A method according to claim 6 or 7, **characterised in that** the punching cut piece is pushed back after the punching process into the opening of the fibre composite structure and removed together therewith from the tool.

9. A forming injection moulding tool for producing a fibre composite structure, especially a motor vehicle body part, with a tool cavity limited by a movable and a fixed mould half for receiving a fibre layer pre-cut part which is inserted in the opening position of the tool and which has had the injection moulding compound injected around it in the closed position, wherein in one of the mould halves (2), a slide (8) which is pushed forward in the opening position of the tool (1, 2) into the tool cavity (3) and moved back in the tool closed position is integrated in the tool cavity to fix the fibre layer pre-cut part (4), **characterised in that** the slide (8) is provided, on the side of the fibre layer pre-cut part, with a contact face (10) pressing the fibre layer pre-cut part in a shaping manner, and **in that** the fibre insert has plastics material injected around it in the injection moulding tool not only at the edge but at least partially also on the front and back.

10. A forming injection moulding tool according to claim 9, **characterised in that** one mould half (2) is provided with at least one punching die (15) driven with a movable stroke and the other mould half (1) is provided with a corresponding bottom punching die (16).

11. A forming injection moulding tool according to claim 10, **characterised in that** the mould half (1) provided with the bottom punching die (16) has a counter-die (17) pushing the punching cut piece (20) back into the fibre composite structure (19) once the punching process has ended.

## Revendications

1. Procédé de fabrication d'une structure composite de fibres, notamment d'une pièce de carrosserie de véhicule automobile,
procédé selon lequel
- on place une pièce formant une couche de fibres (4) dans un outil d'injection et on déforme cette pièce en fermant l'outil et ensuite, on remplit la cavité de l'outil (3) avec une masse injectée et après prise, on démoule la structure composite formée par la masse injectée,
procédé selon lequel
- on découpe un insert de fibres constitué par la pièce formant une couche de fibres, de façon qu'après fermeture de l'outil, il subsiste librement un intervalle du côté du bord, entre l'insert de fibres (4) et la cavité (3) de l'outil, cet intervalle étant ensuite rempli par la masse injectée au cours de l'opération d'injection suivante, et avant la fermeture de l'outil (1, 2), on bloque l'insert de fibres (4) par au moins un tiroir (8), avançant, qui est rétracté dans la cavité de l'outil en position de fermeture de l'outil,
- comme insert de fibres, on utilise une pièce formant une couche de fibres, pré-imprégnée et on pince en position d'ouverture de l'outil d'injection (1, 2), la couche de fibres formant insert (4) par le tiroir (8), appliqué en surface dans la cavité du moule, et
- on enrobe l'insert de fibres dans l'outil d'injection non seulement du côté du bord, mais au moins en partie également sur sa face avant et sa face arrière.

2. Procédé selon la revendication 1,
**caractérisé en ce que**
la masse injectée, est une matière thermoplastique.

3. Procédé selon la revendication 1 ou 2,
**caractérisé en ce que**
la masse injectée, est une matière plastique renforcée par des fibres.

4. Procédé selon l'une des revendications précédentes,
**caractérisé en ce que**
sur les côtés de l'insert de fibres, le tiroir est muni de surfaces de contact qui compriment l'insert de fibres et le mettent en forme.

5. Procédé selon l'une des revendications précédentes,
**caractérisé en ce qu'**
on place l'insert de fibres de manière automatisée dans l'outil d'injection.

6. Procédé selon l'une des revendications précédentes,
**caractérisé en ce qu'**
on réalise un ou plusieurs passages dans l'insert de fibres à l'aide d'au moins un poinçon d'emboutissage mobile en translation dans l'outil d'injection.

7. Procédé selon la revendication 6,
**caractérisé en ce qu'**
on réalise au moins un passage après le figeage de la masse injectée.

8. Procédé selon la revendication 6 ou 7,
**caractérisé en ce qu'**
après l'opération d'emboutissage, on glisse le segment embouti dans le passage de la structure composite renforcée par des fibres et on l'enlève en commun avec l'outil.

9. Outil de mise en forme par injection pour réaliser une structure composite renforcée par des fibres, notamment une pièce de carrosserie de véhicule automobile, comprenant :
- une cavité d'outil délimitée par une moitié de moule fixe et une moitié mobile pour recevoir une pièce formant une couche de fibres, placée dans l'outil en position ouverte et qui sera enrobée en position fermée avec la masse injectée,
- l'une des moitiés de moule (2), intègre un tiroir (8) avancé dans la cavité (3) de l'outil lorsque l'outil (1, 2) est en position d'ouverture et rétracté lorsque l'outil est en position de fermeture pour bloquer la pièce formant la couche de fibres (4) dans la cavité de l'outil,
**caractérisé en ce qu'**
- sur les côtés de la pièce formant la couche de fibres on munit le tiroir (8) d'une surface de contact (10) qui précomprime la pièce formant la couche de fibres en lui donnant une forme, et
- on enrobe par injection la couche de fibres dans l'outil d'injection non seulement au niveau du bord, mais également au moins en partie sur sa face avant et sa face arrière.

10. Outil de moulage par injection selon la revendication 9,
**caractérisé en ce qu'**
on munit une moitié de moule (2) d'au moins un poinçon d'emboutissage (15) entraîné en translation et l'autre (1) d'une matrice d'emboutissage (16) correspondante.

11. Outil de moulage par injection selon la revendication 10,
**caractérisé en ce qu'**
à la fin de l'opération d'emboutissage, la moitié de moule (1) munie de la matrice d'emboutissage (16), comporte un contrepoinçon (17) repoussant le flanc embouti (20) dans la structure de fibres composite (19) à la fin de l'opération d'emboutissage.
